# EUROPÄISCHE PATENTSCHRIFT

(11) **EP 1 922 561 B1**
(45) Veröffentlichungstag und Bekanntmachung des Hinweises auf die Patenterteilung: **07.11.2012**
(21) Anmeldenummer: 06776727.7
(22) Anmeldetag: 10.08.2006
(51) Int. Cl.: G01S 13/02, G01S 13/90, H01Q 3/08

(54) **VERFAHREN UND VORRICHTUNG ZUR ABBILDUNG VON PRÜFOBJEKTEN MITTELS ELEKTROMAGNETISCHER WELLEN, INSBESONDERE ZUR KONTROLLE VON PERSONEN AUF VERDÄCHTIGE GEGENSTÄNDE**
METHOD AND APPARATUS FOR IMAGING TEST OBJECTS BY MEANS OF ELECTROMAGNETIC WAVES, IN PARTICULAR FOR THE PURPOSE OF CHECKING INDIVIDUALS FOR SUSPICIOUS ARTICLES
PROCEDE ET DISPOSITIF POUR OBTENIR L'IMAGE D'OBJETS A CONTROLER AU MOYEN D'ONDES ELECTROMAGNETIQUES, EN PARTICULIER POUR VERIFIER SI DES PERSONNES SONT EN POSSESSION D'OBJETS SUSPECTS

(30) Priorität: 07.09.2005 DE 102005042463
(43) Veröffentlichungstag der Anmeldung: 21.05.2008
(73) Patentinhaber: Smiths Heimann GmbH, 65205 Wiesbaden (DE); Friedrich-Alexander-Universität Erlangen-Nürnberg, 91054 Erlangen (DE)
(72) Erfinder: JECK, Michael, 55122 Mainz (DE); GUMBMANN, Frank, 90403 Nürnberg (DE); SCHMIDT, Lorenz-Peter, 91093 Hessdorf (DE); TRAN, Hue Phat, 90453 Nürnberg (DE); WEINZIERL, Jochen, 90449 Nürnberg (DE)
(74) Vertreter: Thul, Hermann
(86) Internationale Anmeldenummer: PCT/EP2006/007906
(87) Internationale Veröffentlichungsnummer: WO 2007/028472

(56) Entgegenhaltungen:
- DE-A1- 19 757 992
- US-A- 4 841 489
- US-A- 5 673 050
- US-A1- 2003 128 169
- BARA M ET AL: "High-speed focusing algorithm for circular synthetic aperture radar (C-SAR)" ELECTRONICS LETTERS, IEE STEVENAGE, GB, Bd. 36, Nr. 9, 27. April 2000 (2000-04-27), Seiten 828-830, XP006015186 ISSN: 0013-5194

## Beschreibung

Die Erfindung betrifft ein Verfahren zur Abbildung von Prüfobjekten mittels elektromagnetischer Wellen, insbesondere zur Kontrolle von Personen auf verdächtige Gegenstände, bei dem das Prüfobjekt mit elektromagnetischen Wellen beleuchtet wird, und die gestreuten Wellen empfangen und für eine bildhafte Darstellung des Prüfobjekts nach dem Prinzip der synthetischen Apertur (SAR) ausgewertet werden.

Zur Kontrolle von Personen oder Gepäckstücken (nachfolgend als Prüfobjekte bezeichnet) auf versteckte gefährliche Gegenstände (Waffen, Explosivstoffe) sind Verfahren bekannt, bei denen die Prüfobjekte (Personen, Gepäckstücke) mit Millimeterwellen abgescannt werden, um verdächtige Gegenstände zu detektieren. Die US 5,859,609 beschreibt ein derartiges Verfahren, bei dem die zu überprüfende Person auf einer Plattform steht, während sie von einem senkrechten Antennenarray entlang ihres Umfangs sukzessive mit Millimeterwellen beleuchtet wird. Dazu umkreist das Antennenarray die Person und scannt sie umfänglich ab. Aus den vom Ziel reflektierten Wellen werden an einer Vielzahl von vorbestimmten Raumpositionen elektrische Signale erzeugt, aus denen ein Computer eine holographische Neukonstruktion des Ziels erzeugt. Ähnliche Verfahren sind in der US-A 5,455,590 und der EP-A 0925517 beschrieben.

Die deutsche Patentanmeldung 10 2005 016 106 beschreibt ein Verfahren der gattungsgemäßen Art, bei dem ein Prüfobjekt entlang seines Umfangs sukzessiv mit Millimeterwellen beleuchtet wird, die gestreuten Wellen empfangen und für eine bildhafte Darstellung des Prüfobjekts ausgewertet werden, wobei zur Auswertung der Streustrahlen in Richtung der Längsachse des Prüfobjektes das Putsradar- oder FMCW-Prinzip und zur Auswertung quer zur Längsachse das SAR-Prinzip verwendet wird.

Die bekannten Systeme weisen jedoch eine Reihe von Nachteilen auf. Vorrichtungen, die eine Strahlablenkung durch Phasen verschobene Ansteuerung eines Antennenfelds erzeugen, sind sehr aufwendig und teuer. Außerdem sind diese Systeme durch die Geometrie des Antennenfelds auf bestimmte Frequenzbereiche beschränkt. Auch sind die Auflösung und die erzielbare Tiefeninformation zur Kontrolle von Personen auf verdächtige Gegenstände nicht befriedigend.

Der Erfindung liegt daher die Aufgabe zugrunde, ein Verfahren zur Abbildung von Prüfobjekten mittels elektromagnetischer Wellen bereitzustellen, das eine hohe Auflösung ermöglicht und das sich einfach und kostengünstig realisieren lässt.

Diese Aufgabe wird nach der Erfindung dadurch gelöst, dass eine synthetische Apertur dadurch erzeugt wird, dass die von einer Antenne ausgestrahlten Wellen zunächst räumlich gebündelt werden, wobei die Stelle hoher Bündelung so manipuliert wird, dass sie als bewegte virtuelle Antenne für eine SAR-Auswertung dient.

Die Erfindung ermöglicht es, ein zweidimensionales SAR-Verfahren anzuwenden, das sowohl in X- als auch in Y-Richtung eine hohe Auflösung ermöglicht. Durch die Verwendung von bewegbaren virtuellen Antennen lässt sich das SAR-Verfahren realisieren, ohne dass komplexe Antennenansteuerungen erforderlich sind.

Nachfolgend wird die Erfindung anhand verschiedener Ausführungsbeispiele näher erläutert. Beschrieben wird jeweils der Sendefall. Da der Strahlengang reziprok ist, arbeitet das System im Empfangsfall entsprechend. Quelle und Senke der elektromagnetischen Strahlung liegen vor bzw. hinter der Antenne 1. Sende- und Empfangssignal werden durch geeignete Bauelemente getrennt, beispielsweise dadurch, dass die Antenne 1 über Koppler, über Zirkulatoren und/oder über eine Anordnung aus Polarisationsgittern mit einer Sende- bzw. Empfangseinrichtung verbunden ist.

Ebenfalls ist anstelle einer Einzelantenne 1 der Einsatz zweier räumlich dicht nebeneinander positionierter Antennen bzw. Antennensysteme möglich, die jeweils Sende- bzw. Empfangsfunktion haben. Dann baut sich die Antenne 1 aus mindestens einer Sendeantenne und mindestens einer räumlich getrennten Empfangsantenne auf.
- Figur 1: zeigt die Seitenansicht einer Ausführungsform, bei der die Antenne Millimeterwellen abstrahlt, die an einen sich drehenden Bauelement reflektiert und fokussiert werden,
- Figur 2: zeigt eine Frontansicht der Ausführungsform nach Figur 1,
- Figur 3: zeigt eine Ausführungsform, bei der eine schwenkbare Antenne Millimeterwellen abstrahlt, die auf ein quasi-optisches Element gebündelt werden,
- Figur 4: zeigt eine weitere Ausführungsform, bei der eine schwenkbare Antenne Millimeterwellen auf ein reflektierendes Element bündelt,
- Figur 5: zeigt eine weitere Ausführungsform, bei der von einer schwenkbaren Antenne abgestrahlte Millimeterwellen nacheinander auf verschiedene antennenartige Elemente gebündelt werden,
- Figur 6: zeigt eine Ausführungsform, bei der von einer Antenne abgestrahlte Millimeterwellen auf einen Streifen fokussiert werden, der von einer Nipkow-Scheibe abgedeckt ist, die nacheinander an verschiedenen Stellen divergierende Strahlung durchlässt.
Die in den Figuren dargestellten Systeme sind jeweils Teil einer Prüfvorrichtung, die zur Kontrolle von Flugpassagieren auf einem Flughafen dient. Mit der Prüfvorrichtung werden die Flugpassagiere beim Check-in auf verdächtige Gegenstände wie Waffen oder Explosivstoffe geprüft. Die zur Beleuchtung der Prüfobjekte verwendeten elektromagnetischen Wellen haben eine Frequenz zwischen 1 GHz und 10 THz. Bevorzugt werden Millimeterwellen mit einer Frequenz zwischen 30 GHz und 300 GHz verwendet. Zum Empfang der reflektierten Wellen können entweder die Sendeantennen selbst oder getrennte Empfangsantennen verwendet werden.

Bevorzugt enthält die Prüfvorrichtung eine Plattform, auf der sich das Prüfobjekt, beispielsweise ein Flugpassagier, befindet, während die Kontrolle durchgeführt wird. Nach einer Ausführungsform rotieren die Sende- und Empfangssysteme um das stillstehende Prüfobjekt, um es entlang seines Umfangs sukzessiv mit Millimeterwellen zu beleuchten. Alternativ ist es auch möglich, das Prüfobjekt selbst auf einer Plattform vor einem ortsfest angeordneten Sende- und Empfangssystem rotieren zu lassen.

Weiterhin enthält die Prüfvorrichtung ein Auswertesystem mit entsprechender Rechnerleistung, von dem die empfangenen, vom Prüfobjekt gestreuten Wellen nach dem SAR-Prinzip ausgewertet werden, um eine bildhafte Darstellung des Prüfobjekts zu erhalten. Die erstellten Bilder werden einer Bedienungsperson auf entsprechenden Anzeigegeräten angezeigt.

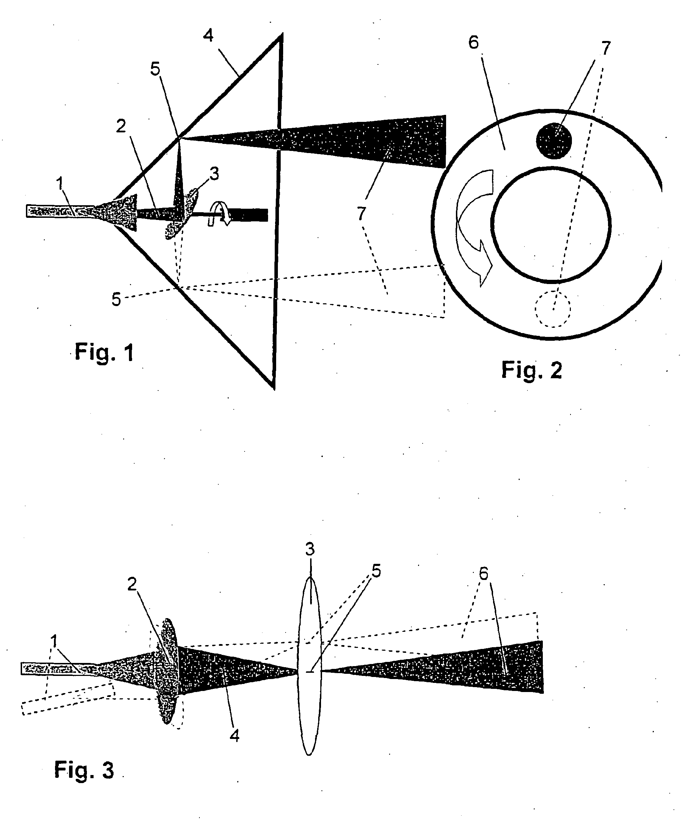

Die in den Figuren 1 und 2 dargestellte Ausführungsform enthält eine Antenne 1, die Millimeterwellen 2 abstrahlt. Die Millimeterwellen 2 treffen auf ein rotierbares Bauelement 3, von dem sie reflektiert und zugleich gebündelt werden. Bevorzugt ist das Element 3 ein rotierender Spiegel, der die Strahlen 2 in Richtung zu einem kegelförmigen Reflektor 4 ablenkt und auf diesem bündelt, so dass die Stelle 5 höchster Bündelung auf dem Reflektor 4 liegt und auf diesem entlang eines Kreises bewegt wird. Der Reflektor 4 ist so geformt, dass im Zusammenwirken mit dem sich drehenden Bauelement 3 die abzubildende Fläche 6 kreisförmig abgetastet wird, wie in Figur 2 dargestellt ist.

Die Stelle 5 höchster Bündelung, also der Reflektionspunkt auf dem Reflektor 4, hat eine so geringe Ausdehnung, dass sie als virtuelle Antenne betrachtet werden kann, die im Fernfeld ein Strahlenbündel 7 mit großem Öffnungswinkel erzeugt. Dieser große Öffnungswinkel ist für eine gute Auflösung mit Hilfe von SAR-Algorithmen erforderlich. Das erzeugte Strahlenbündel 7 tastet das zu untersuchende Prüfobjekt kreisförmig ab. In den Figuren 1 und 2 ist eine zweite Position des Strahlenbündels 7 auf seinem kreisförmigen Weg gestrichelt eingezeichnet.

Zusätzlich wird das Sende- und Empfangssystem horizontal (in Figur 1 aus der Zeichenebene heraus) oder vertikal (in Figur 1 nach oben und unten) bewegt, so dass insgesamt das Prüfobjekt zweidimensional abgetastet wird. Wird die gesamte Sende- und Empfangsanordnung um das Prüfungsobjekt herum bewegt, so ist auch eine Abtastung aus verschiedenen Ansichten möglich.

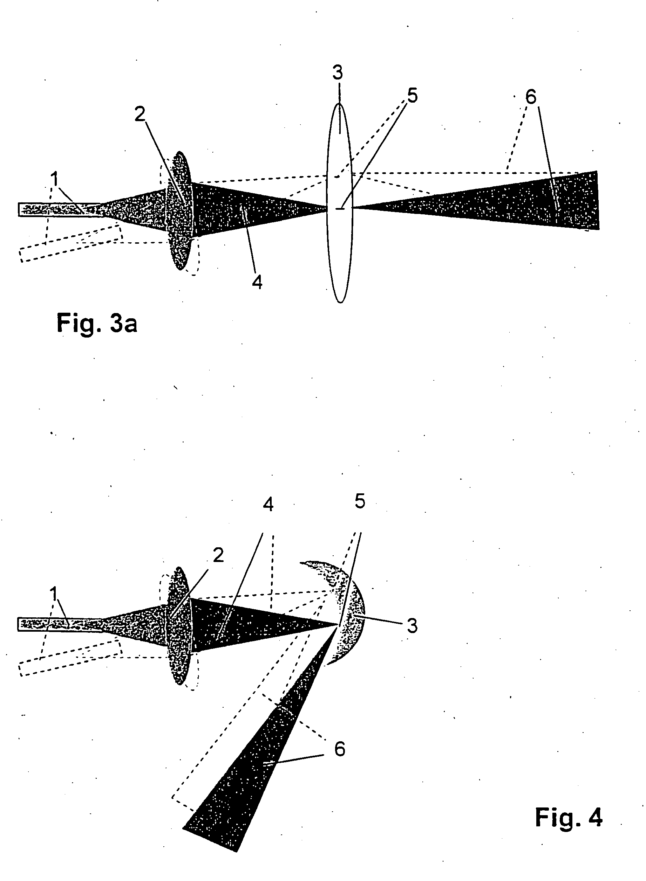

Bei der in Figur 3 dargestellten Ausführungsform werden von einer mechanisch oder elektronisch schwenkbaren Antenne 1 Millimeterwellen abgestrahlt, die von einem mit der Antenne 1 verbundenen fokussierenden Element 2 auf ein quasi-optisches Element 3 gebündelt werden. Als fokussierendes Element 2 kann eine in die Antenne 1 integrierte Linse verwendet werden, derartige kombinierte Anordnungen werden als "Linsenantennen" bezeichnet. Als quasi-optisches Element 3 kann eine Linse, ein Spiegel oder ein anderes Element verwendet werden, das bewirkt, dass die auftreffende Millimeterwellenstrahlung 4 in ein divergierendes Strahlenbündel 6 umgelenkt wird, das bei einer Schwenkbewegung der Antenne 1 parallel auf und ab bewegt wird. Die Stelle 5 höchster Bündelung, die als bewegte virtuelle Antenne für eine SAR-Auswertung dient, bewegt sich innerhalb des quasi-optischen Elements 3. Mit dem sich parallel auf und ab bewegenden divergierenden Strahlenbündel 6 lässt sich das Prüfobjekt linear abtasten. Auch bei dieser Ausführungsform wird die gesamte Sende- und Empfangsanordnung zusätzlich horizontal bewegt (in Figur 3 aus der Zeichenebene heraus), so dass insgesamt das Prüfobjekt zweidimensional abgetastet wird. Bei einer Bewegung des gesamten Sende- und Empfangssystem um das Prüfobjekt herum ist auch eine Abtastung aus verschiedenen Ansichten möglich.

In Figur 4 ist eine weitere Ausführungsform dargestellt. Wie bei der Ausführungsform nach Figur 3 strahlt eine schwenkbare Antenne 1 Millimeterwellen ab, die von einem mit der Antenne 1 verbundenen fokussierenden Element 2 auf ein quasi-optisches Element 3 gebündelt werden. Bei dieser Ausführungsform ist das quasi-optische Element 3 so gestaltet, dass die auftreffende Millimeterstrahlung 4 in ein divergierendes Strahlenbündel 6 umgelenkt wird. Bei einer Schwenkung der Antenne 1 um die gestrichelt gezeichnete Position wird eine Parallelverschiebung des divergierenden Strahlenbündels 6 in die ebenfalls gestrichelt gezeichnete Position bewirkt. Die Stelle 5 höchster Bündelung, die als bewegte virtuelle Antenne für die divergierenden Strahlenbündel 6 angesehen werden kann, bewegt sich bei dieser Ausführungsform auf der Oberfläche des reflektierenden quasi-optischen Elementes 3.

Auch bei dieser Ausführungsform wird die gesamte Sende- und Empfangseinrichtung horizontal bewegt (in Figur 4 aus der Zeichenebene heraus). So wird insgesamt das Prüfobjekt zweidimensional abgetastet. Wird das Sende- und Empfangssystem um das Prüfobjekt herumbewegt, so ist auch hier eine Abtastung aus verschiedenen Ansichten möglich.

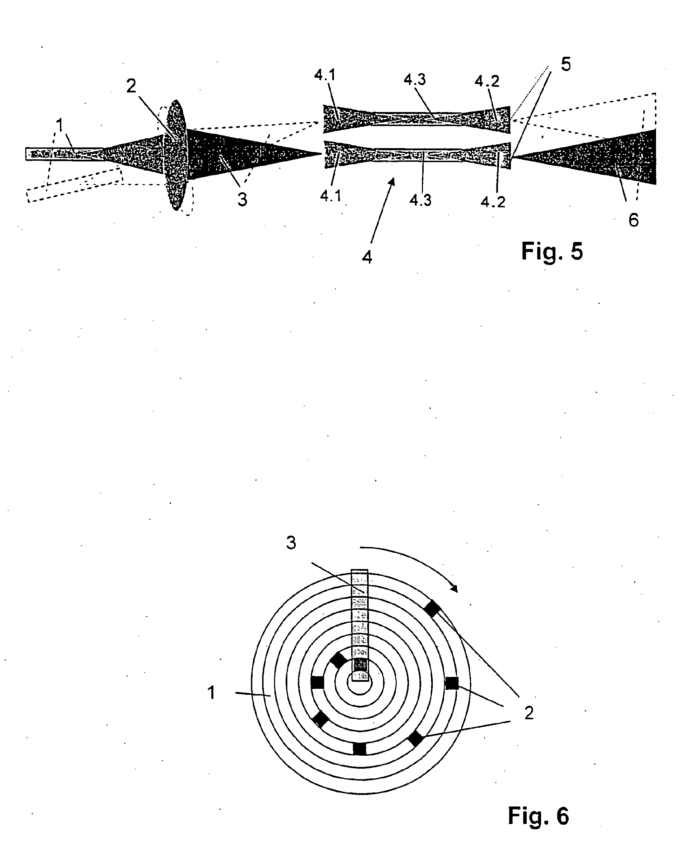

Eine weitere mögliche Ausführungsform der Erfindung ist in Figur 5 dargestellt. Auch diese Ausführungsform enthält eine mechanisch oder elektronisch schwenkbare Antenne 1, die Millimeterwellen abstrahlt, die von einem mit der Antenne 1 verbundenen fokussierenden Element 2 zu einem konvergierenden Strahlenbündel 3 gebündelt werden. Hinter der Antenne 1 mit dem fokussierenden Element 2 sind mehrere Elemente 4 nebeneinander angeordnet, die jeweils aus einer Empfangsantenne 4.1, einer Sendeantenne 4.2 und einer die Empfangsantenne 4.1 mit der Sendeantenne 4.2 verbindenden Leitung 4.3 bestehen. Die Elemente 4 sind so angeordnet, dass ein konvergierendes Strahlenbündel 3 jeweils auf die Empfangsantenne 4.1 fällt. An ihrer Ausgangsseite sendet die Sendeantenne 4.2 jeweils ein divergierendes Strahlenbündel 6 aus. Die Anzahl der Elemente 4 und ihre Anordnung sind dabei so gewählt, dass ein gewisser Raumbereich abgedeckt wird. Bei einer Schwenkung der Antenne 1 fällt das konvergierende Strahlenbündel 3 nacheinander auf die verschiedenen Elemente 4 und erzeugt so nacheinander parallele Strahlenbündel 6, von denen das Prüfobjekt abgetastet wird. Diese Ausführungsform hat den Vorteil, dass die Möglichkeit besteht, die Sendeantennen 4.2 der Elemente 4 unabhängig von ihren Empfangsantennen 4.1 anzuordnen, da die Verbindungsleitungen 4.3 auch gekrümmt verlaufen können. Dies bietet sehr weitgehende Möglichkeiten, durch spezielle Anordnungen der Sendeantennen 4.2 den abzutastenden Raumbereich zu wählen. Bei dieser Ausführungsform bildet jeweils der Ausgang der Sendeantenne 4.2 des Elements 4 die virtuelle Antenne 5 für das divergierende Strahlenbündel 6.

Auch bei der Ausführungsform nach Figur 5 wird die Gesamtanordnung einschließlich der Elemente 4 horizontal bewegt (in Figur 5 aus der Zeichenebene heraus). So wird das Prüfobjekt zweidimensional abgetastet. Auch bei dieser Ausführungsform ist durch eine Bewegung der Gesamtanordnung um das Prüfobjekt herum dessen Abtastung aus verschiedenen Ansichten möglich.

An Stelle der vorstehend beschriebenen Erzeugung von parallelen divergierenden Strahlenbündein durch die jeweiligen quasi-optischen Elemente können die beschriebenen Vorrichtungen auch nach Art eines Spotlight-SAR betrieben werden. Bei diesem Verfahren wird die Antenne nachführend so geschwenkt, dass das Prüfobjekt länger bestrahlt wird. Es werden durch das quasi-optische Element nacheinander Strahlenbündel erzeugt, deren Neigungswinkel sich ändert. Dieses Verfahren hat den Vorteil, dass die virtuelle Antennenapertur vergrößert wird.

Bei der weiteren Ausführungsform nach Figur 6 befinden sich hinter der nicht dargestellten Antenne eine sogenannte Nipkow-Scheibe 1. Die Scheibe 1 ist drehbar gelagert und enthält Löcher 2, die auf konzentrischen Kreisen mit unterschiedlichem Durchmesser angeordnet sind. Die von der Antenne abgestrahlten Millimeterwellen werden auf einen Streifen 3 fokussiert, vor dem sich die Scheibe 1 dreht. Da bei jedem Durchlauf eines Lochs 2 durch den Streifen 3 durch das Loch 2 Millimeterwellen divergent abgestrahlt werden, kann das jeweils im Streifen 3 befindliche Loch 2 als virtuelle Antenne für die divergierende Strahlung angesehen werden. Die virtuelle Antenne wandert entlang des Streifens 3, da die Löcher 2 den Streifen 3 nacheinander auf unterschiedlichen Radien durchlaufen. Aufgrund der Drehbewegungen der Scheibe 1 entsteht so ein bewegtes Strahlenbündel, das das zu untersuchende Prüfobjekt linear abtastet. Durch eine zusätzliche Bewegung der Gesamtanordnung, wie sie bei den Ausführungsformen nach den Figuren 1 bis 5 beschrieben ist, kann das Prüfobjekt zweidimensional und auch aus verschiedenen Richtungen abgetastet werden.

## Patentansprüche

1. Verfahren zur Abbildung von Prüfobjekten mittels elektromagnetischer Wellen, insbesondere zur Kontrolle von Personen auf verdächtige Gegenstände, bei dem das Prüfobjekt mit elektromagnetischen Wellen beleuchtet wird, die gestreuten Wellen empfangen und für eine bildhafte Darstellung des Prüfobjekts nach dem Prinzip der synthetischen Apertur (SAR) ausgewertet werden, **dadurch gekennzeichnet, dass** eine synthetische Apertur dadurch erzeugt wird, dass die von einer Antenne (1-Fig.1) ausgestrahlten Wellen zunächst räumlich gebündelt werden, wobei die Stelle (5) hoher Bündelung so manipuliert wird, dass sie als bewegte virtuelle Antenne für eine SAR-Auswertung dient.

2. Verfahren nach Anspruch 1, **dadurch gekennzeichnet, dass** Millimeterwellen mit einer Frequenz zwischen 1 GHz und 10 THz, bevorzugt zwischen 30 GHz und 300 GHz, verwendet werden.

3. Verfahren nach Anspruch 1 oder 2, **dadurch gekennzeichnet, dass** durch Schwenken der Antenne (1-Fig.3) und eines mit der Antenne verbundenen nachfolgenden fokussierenden Elements (2-Fig.3), von dem die Wellen auf ein quasi-optisches Element (3-Fig.3) gebündelt werden, von dem quasi-optischen Element (3-Fig.3) nacheinander parallele divergierende Strahlenbündel (6-Fig.3) erzeugt werden.

4. Verfahren nach Anspruch 1 oder 2, **dadurch gekennzeichnet, dass** durch Schwenken der Antenne (1-Fig.3a) und eines mit der Antenne verbundenen nachfolgenden fokussierenden Elements (2-Fig.3a), von dem die Wellen auf ein quasi-optisches Element (3-Fig.3a) gebündelt werden, von dem quasi-optischen Element (3-Fig.3a) nacheinander divergierende Strahlenbündel (6-Fig.3a) mit sich änderndem Neigungswinkel erzeugt werden, so dass nach Art des Spotlight-SAR die Strahlenbündel auf den selben Punkt im Raum ausgerichtet bleiben.

5. Vorrichtung zur Durchführung eines Verfahrens nach den Ansprüchen 1 bis 4 mit folgenden Merkmalen:
eine Antenne (1-Fig.1) die elektromagnetische Wellen, insbesondere Millimeterwellen, ausstrahlt,
- Mittel zur räumlichen Bündelung der ausgestrahlten Wellen und
Mittel zur Manipulation der Wellen an der Stelle (5) hoher Bündelung derart, dass diese Stelle (5) als bewegte virtuelle Antenne für eine SAR-Auswertung dient.

6. Vorrichtung nach Anspruch 5 **gekennzeichnet durch**
- eine Antenne (1-Fig.1), die elektromagnetische Wellen, insbesondere Millimeterwellen, ausstrahlt und empfängt, und **durch**
- Mittel zur räumlichen Bündelung der ausgestrahlten und empfangenen Wellen.

7. Vorrichtung nach Anspruch 5 oder 6 **gekennzeichnet durch** ein rotierbares Bauelement (3-Fig.1) von dem die Wellen reflektiert und auf einem Reflektor (4-Fig.1) gebündelt werden, wobei der Reflektor (4-Fig.1) ein bewegtes divergierendes Strahlenbündel abgibt.

8. Vorrichtunonach Anspruch 5 oder 6 **gekennzeichnet durch** eine schwenkbare Antenne (1-Fig.3) und ein mit der Antenne verbundenes nachfolgendes fokussierendes Element (2-Fig.3), von dem die Wellen auf ein quasi-optisches Element (3-Fig.3) gebündelt werden, wobei das quasi-optische Element (3-Fig.3) ein divergierendes Strahlenbündel (6-Fig.3) abgibt, das bei einer Schwenkbewegung der Antenne (1-Fig.3) parallel verschoben wird.

9. Vorrichtung nach Anspruch 5 oder 6, **dadurch gekennzeichnet, dass** die virtuelle Antenne (5) mittels einer Nipkow-Scheibe (1-Fig.6) erzeugt wird, die einen Streifen (3 Fig.6) abdeckt, auf den die von einer Antenne abgestrahlten Wellen fokussiert werden.

10. Vorrichtung nach einem der Ansprüche 5 bis 9, **dadurch gekennzeichnet, dass** die Antenne (1) über ein geeignetes Bauelement, insbesondere über Koppler, über Zirkulatoren und/oder über eine Anordnung aus Polarisationsgittern, mit einer Sende- und. Empfangseinrichtung verbunden ist.

11. Vorrichtung nach einem der Ansprüche 5 bis 10, **dadurch gekennzeichnet, dass** sich die Antenne (1) aus mindestens einer Sendeantenne und mindestens einer räumlich getrennten Empfangsantenne aufbaut.

## Claims

1. Method for imaging test objects by means of electromagnetic waves, in particular for the purpose of checking individuals for suspicious articles, in which the test object is illuminated with electromagnetic waves, the scattered waves are received and are evaluated for a representation of the test object as an image in accordance with the synthetic aperture (SAR) principle, **characterized in that** a synthetic aperture is produced by the waves emitted by an antenna (1 - Fig. 1) initially being concentrated spatially, the point (5) of high concentration being manipulated such that it serves as a moving virtual antenna for an SAR evaluation.

2. Method according to Claim 1, **characterized in that** use is made of millimetre waves with a frequency between 1 GHz and 10 THz, preferably between 30 GHz and 300 GHz.

3. Method according to Claim 1 or 2, **characterized in that,** by pivoting the antenna (1 - Fig. 3) and a following focusing element (2 - Fig. 3) connected to the antenna, by which focusing element the waves are concentrated on a quasi-optical element (3 - Fig. 3), parallel divergent beams (6 - Fig. 3) are produced successively by the quasi-optical element (3 - Fig. 3).

4. Method according to Claim 1 or 2, **characterized in that,** by pivoting the antenna (1 - Fig. 3a) and a following focusing element (2 - Fig. 3a) connected to the antenna, by which focusing element the waves are concentrated on a quasi-optical element (3 - Fig. 3a), divergent beams (6 - Fig. 3a) with a changing angle of inclination are produced successively by the quasi-optical element (3 - Fig. 3a), so that the beams remain aligned with the same point in space in the manner of the spotlight SAR.

5. Apparatus for carrying out a method according to Claims 1 to 4, having the following features:
- an antenna (1 - Fig. 1), which emits electromagnetic waves, in particular millimetre waves,
- means for the spatial concentration of the emitted waves, and
- means for manipulating the waves at the point (5) of high concentration in such a way that this point (5) serves as a moving virtual antenna for an SAR evaluation.

6. Apparatus according to Claim 5, **characterized by**
- an antenna (1 - Fig. 1), which emits and receives electromagnetic waves, in particular millimetre waves, and by
- means for the spatial concentration of the emitted and received waves.

7. Apparatus according to Claim 5 or 6, **characterized by** a rotatable component (3 - Fig. 1), by which the waves are reflected and concentrated on a reflector (4 - Fig. 1), the reflector (4 - Fig. 1) outputting a moving divergent beam.

8. Apparatus according to Claim 5 or 6, **characterized by** a pivotable antenna (1 - Fig. 3) and a following focusing element (2 - Fig. 3) connected to the antenna, by which focusing element the waves are concentrated on a quasi-optical element (3 - Fig. 3), the quasi-optical element (3 - Fig. 3) outputting a divergent beam (6 - Fig. 3), which is displaced in parallel during a pivoting movement of the antenna (1 - Fig. 3).

9. Apparatus according to Claim 5 or 6, **characterized in that** the virtual antenna (5) is produced by means of a Nipkow disc (1 - Fig. 6), which covers a strip (3 - Fig. 6) on which the waves emitted by an antenna are focused.

10. Apparatus according to one of Claims 5 to 9, **characterized in that** the antenna (1) is connected to a transmitting and receiving device via a suitable component, in particular via couplers, via circulators and/or via an arrangement of polarization gratings.

11. Apparatus according to one of Claims 5 to 10, **characterized in that** the antenna (1) is built up from at least one transmitting antenna and at least one spatially separated receiving antenna.

## Revendications

1. Procédé pour représenter des objets à contrôler au moyen d'ondes électromagnétiques, notamment pour contrôler la présence d'objets suspects sur des personnes, selon lequel l'objet à contrôler est éclairé avec des ondes électromagnétiques, les ondes dispersées sont reçues et sont interprétées pour une représentation imagée de l'objet à contrôler d'après le principe de la synthèse d'ouverture (SAR), **caractérisé en ce qu'**une synthèse d'ouverture est générée par le fait que les ondes émises par une antenne (1-Fig. 1) sont tout d'abord mises en faisceau dans l'espace, l'endroit (5) de la mise en faisceau élevée étant manipulé de telle sorte qu'il fait office d'antenne virtuelle mobile pour une interprétation SAR.

2. Procédé selon la revendication 1, **caractérisé en ce que** des ondes millimétriques ayant une fréquence entre 1 GHz et 10 THz, de préférence entre 30 GHz et 300 GHz sont utilisées.

3. Procédé selon la revendication 1 ou 2, **caractérisé en ce que** des faisceaux de rayons (6-Fig.3) divergeant en parallèle sont générés les uns après les autres en pivotant l'antenne (1-Fig. 3) et un élément de concentration (2-Fig. 3) suivant relié avec l'antenne, par lequel les ondes sont mises en faisceau sur un élément quasi-optique (3-Fig. 3), par rapport à l'élément quasi-optique (3-Fig. 3).

4. Procédé selon la revendication 1 ou 2, **caractérisé en ce que** des faisceaux de rayons (6-Fig.3a) divergeant ayant des angles d'inclinaison variables sont générés les uns après les autres en pivotant l'antenne (1-Fig. 3a) et un élément de concentration (2-Fig. 3a) suivant relié avec l'antenne, par lequel les ondes sont mises en faisceau sur un élément quasi-optique (3-Fig. 3a), par rapport à l'élément quasi-optique (3-Fig. 3a), de sorte que les faisceaux de rayons restent dirigés sur le même point dans l'espace à la manière d'un SAR à spot lumineux.

5. Dispositif pour mettre en oeuvre un procédé selon les revendications 1 à 4, possédant les caractéristiques suivantes :
- une antenne (1-Fig. 1) qui émet des ondes électromagnétiques, notamment des ondes millimétriques,
- des moyens de mise en faisceau dans l'espace des ondes émises et
- des moyens de manipulation des ondes à l'endroit (5) de la mise en faisceau élevée de telle sorte que cet endroit (5) fasse office d'antenne virtuelle mobile pour une interprétation SAR.

6. Dispositif selon la revendication 5, **caractérisé par**
- une antenne (1-Fig. 1) qui émet et reçoit des ondes électromagnétiques, notamment des ondes millimétriques, et par
- des moyens de mise en faisceau dans l'espace des ondes émises et reçues.

7. Dispositif selon la revendication 5 ou 6, **caractérisé par** un composant rotatif (3-Fig. 1) par lequel les ondes sont réfléchies et sont mises en faisceau sur un réflecteur (4-Fig. 1), le réflecteur (4-Fig. 1) délivrant un faisceau de rayons divergeant mobile.

8. Dispositif selon la revendication 5 ou 6, **caractérisé par** une antenne pivotante (1-Fig. 3) et un élément de concentration (2-Fig. 3) suivant relié avec l'antenne, par lequel les ondes sont mises en faisceau sur un élément quasi-optique (3-Fig. 3), l'élément quasi-optique (3-Fig. 3) délivrant un faisceau de rayons (6-Fig. 3) divergeant qui est décalé parallèlement lors d'un mouvement de pivotement de l'antenne (1-Fig. 3).

9. Dispositif selon la revendication 5 ou 6, **caractérisé en ce que** l'antenne virtuelle (5) est générée au moyen d'un disque de Nipkow (1-Fig. 6), lequel recouvre une bande (3-Fig. 6) sur laquelle sont concentrées les ondes émises par une antenne.

10. Dispositif selon l'une des revendications 5 à 9, **caractérisé en ce que** l'antenne (1) est reliée par le biais d'un composant approprié, notamment par le biais de coupleurs, de circulateurs et/ou d'un arrangement de grilles de polarisation, avec un dispositif d'émission et de réception.

11. Dispositif selon l'une des revendications 5 à 10, **caractérisé en ce que** l'antenne (1) est constituée d'au moins une antenne d'émission et d'au moins une antenne de réception séparée dans l'espace.
